Europäisches Patentamt
European Patent Office
Office européen des brevets

(19)

(11) Veröffentlichungsnummer: **0 350 694 A1**

(12) # EUROPÄISCHE PATENTANMELDUNG

(21) Anmeldenummer: **89111546.1**

(51) Int. Cl.⁴: **C07F 9/32**

(22) Anmeldetag: **24.06.89**

(30) Priorität: **14.07.88 DE 3823885**
**27.04.89 DE 3913891**

(43) Veröffentlichungstag der Anmeldung:
**17.01.90 Patentblatt 90/03**

(84) Benannte Vertragsstaaten:
**AT BE CH DE ES FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Böhshar, Manfred, Dr.**
**Im Förstergrund 14**
**D-6233 Kelkheim(DE)**
Erfinder: **Erpenbach, Heinz, Dr.**
**Oberbuschweg 22**
**D-5000 Köln(DE)**
Erfinder: **Jägers, Erhard, Dr.**
**Hemberger Strasse 75**
**D-5303 Bornheim(DE)**
Erfinder: **Kleiner, Hanss-Jerg, Dr.**
**Altköningstrasse 11a**
**D-6242 Kronberg(DE)**
Erfinder: **Koll, Hans-Peter**
**Zur alten Schmiede 7**
**D-5030 Hürth(DE)**

(54) **Verfahren zur Herstellung von N-Acyl-phosphinothricindiestern.**

(57) Zur Herstellung von N-Acyl-phosphinothricindiestern setzt man Acetale von Methyl-(3-oxo-propyl)-phosphinsäureestern der Formel

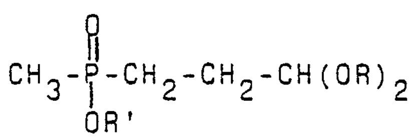

mit einem Carbonsäureamid und Kohlenmonoxid in Gegenwart von Wasserstoffgas unter Einsatz einer Cobaltverbindung als Katalysator in einem dipolaren aprotischen Lösemittel um, wobei der Rest R′ Alkyl oder Aryl oder Aralkyl ist.

EP 0 350 694 A1

# Verfahren zur Herstellung von N-Acyl-phosphinothricindiestern

Die Erfindung betrifft ein neues Verfahren zur Herstellung von N-Acyl-phosphinothricindiestern bzw. Methyl-(3-acylamino-3-alkoxycarbonyl-propyl)-phosphinsäureestern der Formel

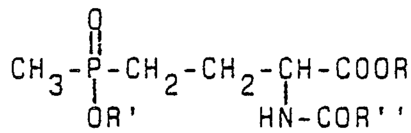

welche Zwischenprodukte für das Herbizid Phosphinothricin der Formel

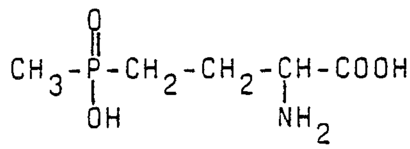

darstellen und wobei R′ für einen aliphatischen, aromatischen oder araliphatischen Rest steht.

Bisherige Herstellungsverfahren für derartige Ester basieren auf der Umsetzung von Methanphosphonigsäureestern mit Vinylessigsäureestern in Gegenwart von Radikal-Startern oder unter Bestrahlung mit UV-Licht (vergl. EP-OS 0 018 415) sowie auf einer Strecker-Synthese mit Methyl-(3-oxo-propyl)-phosphinsäureestern (vergl. US-PS 4 264 532).

Die Umsetzung bestimmter Aldehyde oder aldehydbildender Substanzen mit einem Carbonsäureamid und Kohlenmonoxid in Gegenwart einer Cobaltverbindung als Katalysator und von Wasserstoffgas ist bereits in allgemeiner Form beschrieben worden (vergl. H. Wakamatsu et al. in CHEMICAL COMMUNICATIONS, 1971, Seite 1540) :

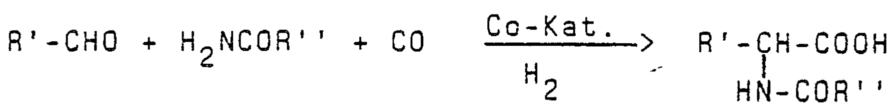


Überraschenderweise wurde nun gefunden, daß dieser Reaktion auch ein eine Phosphinsäureestergruppe enthaltendes Aldehyd-Acetal vom Typ der Methyl-(3,3-dialkoxy-propyl)-phosphinsäureester unterworfen werden kann:

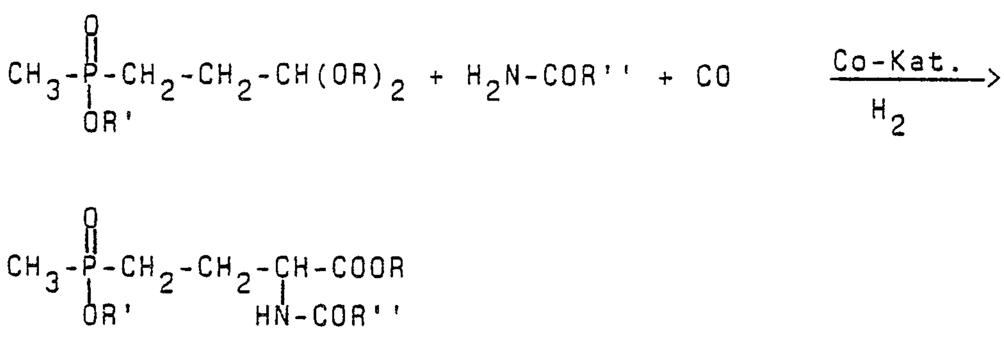


(n-Acyl-Phosphinothricin-diester)

Im einzelnen ist das Verfahren der Erfindung zur Herstellung von N-Acylphosphinothricin-diestern dadurch gekennzeichnet, daß man Acetale von Methyl-(3-oxo-propyl)-phosphinsäureestern mit einem Carbonsäureamid und Kohlenmonoxid in Gegenwart von Wasserstoffgas unter Einsatz einer Cobaltverbindung als Katalysator in einem dipolaren aprotischen Lösemittel umsetzt, wobei der Rest R′ Alkyl oder Aryl oder Aralkyl ist.

Dabei kann beim Methyl-(3,3-dialkoxy-propyl)-phosphinsäureester der Rest R′ bis zu 10, vorzugsweise 4 bis 10, insbesondere 5 bis 8 Kohlenstoffatome aufweisen, wobei der Rest R′ gegebenenfalls halogensubstituiert sein kann.

Als Carbonsäureamide können Amide von aliphatischen, aromatischen oder araliphatischen Carbonsäuren (R″) eingesetzt werden.

Die Umsetzung erfolgt mit Cobaltverbindungen als Katalysator, z.B. mit Acetaten, Chloriden, Hydroxiden oder Acetyl-acetonaten des Cobalts, wobei jedoch Di-cobalt-octa-carbonyl, $Co_2(CO)_8$, bevorzugt eingesetzt wird.

Als dipolare aprotische Lösemittel sind bevorzugt einsetzbar: Dioxan, Tetrahydrofuran, Dibutylether, Ethylenglykol-dimethylether, Essigsäureethylester, Acetonitril, Sulfolan, N-Methylpyrrolidon oder N,N-Dimethylacetamid.

Die Reaktion kann bei Drucken von 40 bis 200 bar, vorzugsweise bei 80 bis 150 bar, und bei Temperaturen von 20 bis 160° C, vorzugsweise bei 80 bis 140° C, durchgeführt werden.

Es werden $CO/H_2$-Gasgemische eingesetzt, die bevorzugt 10 bis 40 Vol% Wasserstoff enthalten.

Aus dem N-acylierten sowie P- und C-veresterten Zwischenprodukt kann das Phosphinotricin in an sich bekannter Weise durch Umsetzung mit wäßriger Säure, vorzugsweise 6n Salzsäure, gewonnen werden.

Methyl-(3,3-dialkoxy-propyl)-phosphinsäureester, bei denen die an das Phosphoratom gebundene OR′-Gruppe mehr als 3 Kohlenstoffatome aufweist, lassen sich in besserer Ausbeute zum N-Acyl-phosphinothricin-P-ester umsetzen. Darüberhinaus sind Acetale von Methyl-(3-oxo-propyl)-phosphinsäureestern mit 4 bis 10 Kohlenstoffatomen in der an das Phosphoratom gebundenen OR′-Gruppe in einfacher Weise herstellbar, beispielsweise nach dem Verfahren gemäß der älteren, nicht vorveröffentlichten deutschen Patentanmeldung P 39 00 331.0.

Beispiel 1

14,95 g Methyl-(3,3-diethoxy-propyl)-phosphinsäure-ethylester, 4,13 g Acetamid, 70 ml 1,4Dioxan und 0,42 g $Co_2(CO)_8$ werden in einem 150-ml-Autoklaven mit 120 bar $CO/H_2$ im Volumenverhältnis 3 : 1 bei 120° C umgesetzt. Nach einer Reaktionszeit von 60 min wird das Gemisch mittels Hochdruckflüssigchromatographie HPLC analysiert. Man findet 9,8 g N-Acetyl-phosphinotricindiethylester. Außerdem fallen noch 0,95 g N-Acetylphosphinotricin-P-ethylester an. Dies entspricht einer Gesamt-Ausbeute von 62,0 %.

Beispiel 2

16,66 g Methyl-(3,3-diethoxy-propyl)-phosphinsäureethylester, 9,46 g Phenylacetamid, 70 ml 1,4 Dioxan und 0,42 g Di-cobaltoctacarbonyl werden in einem 150-ml-Autoklaven mit 120 bar $CO/H_2$ im Volumenverhältnis 3 : 1 bei 100° C 60 min umgesetzt. Das Reaktionsprodukt wird anschließend mittels HPLC analysiert. Man findet 14,2 g N-Phenylacetyl-phosphinothricin-diethylester und 2,3 g N-Phenylacetyl-phosphinothricin-P-ethylester. Dies entspricht einer Gesamtausbeute von 67,1 %.

In den folgenden Beispielen 3 bis 12 wurden jeweils 70 mmol Methyl-(3,3-dialkoxy-propyl)-phosphinsäureester mit 70 mmol Acetamid in 70 ml Essigsäureethylester in Anwesenheit von 1,23 mmol Dicobaltoctacarbonyl (entsprechend 2,46 mmol Cobalt) mit einem $CO/H_2$-Gemisch im Volumenverhältnis 3 : 1 in einem Autoklaven bei 120° C und 120 bar zur Reaktion gebracht. Nach einer Reaktionszeit von 60 Minuten wurde der Autoklav entspannt und das Reaktionsgemisch mittels Hochdruckflüssigchromatographie (HPLC) analysiert und damit die Ausbeute an N-Acetyl-phosphinothricin-diester bestimmt.

| Beispiel | R′ | R | Ausbeute [%] |
|---|---|---|---|
| 3 | n-Butyl | Ethyl | 79 |
| 4 | iso-Butyl | Ethyl | 79 |
| 5 | n-Pentyl | Ethyl | 72 |
| 6 | 2-Methyl-butyl | Ethyl | 75 |
| 7 | iso-Pentyl | Ethyl | 75 |
| 8 | n-Hexyl | Ethyl | 76 |
| 9 | 2-Ethyl-hexyl | Ethyl | 69 |
| 10 | iso-Butyl | Methyl | 70 |
| 11 | iso-Pentyl | Methyl | 73 |
| 12 | 2-Methyl-butyl | Methyl | 70 |

## Ansprüche

1. Verfahren zur Herstellung von N-Acyl-phosphinothricindiestern, dadurch gekennzeichnet, daß man Acetale von Methyl-(3-oxo-propyl)-phosphinsäureestern der Formel

$$CH_3-\overset{\overset{O}{\|}}{\underset{\underset{OR'}{|}}{P}}-CH_2-CH_2-CH(OR)_2$$

mit einem Carbonsäureamid und Kohlenmonoxid in Gegenwart von Wasserstoffgas unter Einsatz einer Cobaltverbindung als Katalysator in einem dipolaren aprotischen Lösemittel umsetzt, wobei beim Methyl-(3,3-dialkoxy-propyl)-phosphinsäureester der Rest R′ Alkyl oder Aryl oder Aralkyl ist.

2. Verfahren nach Anspruch 1, dadurch gekennzeichnet, daß beim Methyl-(3,3-dialkoxy-propyl)-phosphinsäureester der Rest R′ bis zu 3 Kohlenstoffatome aufweist.

3. Verfahren nach Anspruch 1, dadurch gekennzeichnet, daß beim Methyl-(3,3-dialkoxy-propyl)-phosphinsäureester der Rest R′ 4 bis 10, vorzugsweise 5 bis 8 Kohlenstoffatome aufweist.

Europäisches Patentamt

# EUROPÄISCHER RECHERCHENBERICHT

Nummer der Anmeldung

EP 89 11 1546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CHEMICAL ABSTRACTS, Band 104, Nr. 5, 3. February 1986, Seite 528, Zusammenfassung Nr. 33873f, Columbus, Ohio, US; & JP-A-60 142 948 (AJINOMOTO CO., INC.) 29-07-1985 * Zusammenfassung * | 1-3 | C 07 F 9/32 |
| D,Y | CHEMICAL COMMUNICATIONS (THE JOURNAL OF THE CHEMICAL SOCIETY, SECTION D), Nr. 23, 8. Dezember 1971, Seite 1540; H. WAKAMATSU et al.: "Synthesis of N-acyl amino acids by a carbonylation reaction" * Insgesamt * | 1-3 | |
| D,Y | EP-A-0 009 022 (MEIJI SEIKA KAISHA LTD) * Insgesamt * | 1-3 | |
| P,Y | EP-A-0 292 918 (NISSAN CHEMICAL INDUSTRY LTD) * Insgesamt * | 1-3 | RECHERCHIERTE SACHGEBIETE (Int. Cl.5)<br>C 07 F 9/00<br>C 07 C 103/00 |

Der vorliegende Recherchenbericht wurde für alle Patentansprüche erstellt

| Recherchenort | Abschlußdatum der Recherche | Prüfer |
|---|---|---|
| DEN HAAG | 11-10-1989 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument